# EUROPEAN PATENT APPLICATION

(11) **EP 4 826 674 A1**
(43) Date of publication of application: **21.10.2026**
(21) Application number: 24902536.2
(22) Date of filing: 23.11.2024
(51) Int. Cl.: G06V 10/80

(54) **IMAGE DETECTION METHOD AND APPARATUS, ELECTRONIC DEVICE, AND STORAGE MEDIUM**

(30) Priority: 14.12.2023 CN 202311719012
(71) Applicant: Shining 3D Tech Co., Ltd., Hangzhou, Zhejiang 311258 (CN)
(72) Inventor: LI, Chen, Hangzhou, Zhejiang 311258 (CN); JIANG, Tengfei, Hangzhou, Zhejiang 311258 (CN); WANG, Jialei, Hangzhou, Zhejiang 311258 (CN); PI, Chengxiang, Hangzhou, Zhejiang 311258 (CN); ZHANG, Jian, Hangzhou, Zhejiang 311258 (CN); WANG, Shan, Hangzhou, Zhejiang 311258 (CN)
(74) Representative: Metida
(86) International application number: PCT/CN2024/134024
(87) International publication number: WO 2025/124114

(57) **Abstract**

Embodiments of the present disclosure provide an image detection method and apparatus, an electronic device, and a storage medium. The method comprises: acquiring a current image frame collected by a lens module, and a plurality of frames of reference images collected before and/or after collecting the current image frame; performing extraction to obtain a shallow local feature map of the current image frame and a shallow local feature map of each reference image frame; and then fusing the shallow local feature map of each reference image frame into the shallow local feature map of the current image frame, wherein in a selected specific fusion mode, a feature value, having high similarity with a feature value on a corresponding position in the shallow local feature map of the reference image, on a position of the shallow local feature map of the current image frame is enhanced, so as to obtain a fused shallow local feature map. Because a dirty feature becomes more remarkable in the finally obtained fused shallow local feature map, a dirt detection result obtained on the basis of the fused shallow local feature map is also more accurate.

## Description

### CROSS-REFERENCE TO RELATED APPLICATION

This application claims priority to Chinese Patent Application No. 202311719012.5, filed with the China National Intellectual Property Administration on December 14, 2023, and entitled "IMAGE DETECTION METHOD, APPARATUS, ELECTRONIC DEVICE, AND STORAGE MEDIUM," the entire content of which is incorporated herein by reference.

### TECHNICAL FIELD

The present application relates to a field of image processing technology, and in particular, to an image detection method, an apparatus, an electronic device, and a storage medium.

### BACKGROUND ART

In a scenario where a lens module is used to capture an image, the lens module often has contamination. The contamination on the lens module may severely affect quality of a captured image, thereby impacting subsequent use of the image. Therefore, it is necessary to timely detect contamination on the lens module to prompt a user to clean the lens. However, existing technologies are susceptible to interference from various situations, mistakenly identifying portions of an image that merely resemble contamination as actual contamination, leading to inaccurate detection results. Therefore, a more accurate solution for detecting contamination of the lens is needed.

### SUMMARY

The present disclosure provides an image detection method, an apparatus, an electronic device, and a storage medium.

According to a first aspect of an embodiment of the present disclosure, an image detection method is provided. The method includes: acquiring a current image frame and a reference image captured by a lens module, wherein the reference image includes a plurality of image frames captured before and/or after the current image frame; performing feature extraction on the current image frame and the reference image respectively to obtain a shallow local feature map of the current image frame and a shallow local feature map of the reference image; fusing the shallow local feature map of the reference image into the shallow local feature map of the current image frame to obtain a fused shallow local feature map, wherein during the fusing process, a feature value at a target pixel position in the shallow local feature map of the current image frame is enhanced, and a similarity between the feature value at the target pixel position and a feature value at a corresponding pixel position of the target pixel position in the shallow local feature map of the reference image is higher than a preset similarity; and determining whether contamination is on the lens module based on the fused shallow local feature map.

According to a second aspect of an embodiment of the present disclosure, an image detection method is provided. The method includes: acquiring an image to be detected currently captured by a lens module on a three-dimensional scanning device; inputting the image to be detected into a pre-trained detection model, and determining, via the detection model, a current scanning environment type of the three-dimensional scanning device; wherein the detection model is trained based on a method including: acquiring at least two frames of sample images, the at least two frames of sample images corresponding to a same scanning environment type; performing feature extraction on the at least two frames of sample images respectively using a preset initial model to obtain a global feature of each of the at least two frames of sample images; determining a target loss based on a difference between a similarity of global features of pairwise sample images among the at least two frames of sample images and a preset similarity threshold; and updating a model parameter of the initial model based on the target loss to train and obtain the detection model.

According to a third aspect of an embodiment of the present disclosure, an image detection method is provided. The method includes: acquiring an image to be detected currently captured by a lens module on a three-dimensional scanning device; inputting the image to be detected into a pre-trained detection model, and determining, via the detection model, a current scanning environment type of the three-dimensional scanning device; wherein the detection model is trained based on a method including: acquiring a sample image triplet, each sample image triplet including a first sample image, a second sample image having a scanning environment type identical to a scanning environment type of the first sample image, and a third sample image having a scanning environment type different from the scanning environment type of the first sample image; performing the feature extraction on the first sample image, the second sample image, and the third sample image respectively using a preset initial model to obtain a respective global feature; determining a target loss based on a similarity between the global feature of the second sample image and the global feature of the first sample image, and a similarity between the global feature of the third sample image and the global feature of the first sample image; and updating a model parameter of the initial model based on the target loss to train and obtaining the detection model.

According to a fourth aspect of an embodiment of the present disclosure, an image detection method is provided. The method includes: acquiring an image to be detected currently captured by a lens module on a three-dimensional scanning device; performing the feature extraction on the image to be detected to obtain a global feature; and determining, according to a degree of proximity between the global feature and a preset feature clustering center, whether a current scanning environment type of the three-dimensional scanning device is a target environment; wherein the feature clustering center is a clustering center of global features of a plurality of frames of sample images, and the sample image is an image captured by the three-dimensional scanning device in the target environment.

According to a fifth aspect of an embodiment of the present disclosure, an image detection apparatus is provided. The apparatus includes: an acquisition module, configured to a current frame image and a plurality of reference images captured by a lens module, the plurality of reference images comprising a plurality of frames of images captured before the current frame image and/or a plurality of frames of images captured after the current frame image; a feature extraction module, configured to perform feature extraction on the current image frame and the reference image respectively to obtain a shallow local feature map of the current image frame and a shallow local feature map of the reference image; a fusion module, configured to fuse the shallow local feature map of the reference image into the shallow local feature map of the current image frame to obtain a fused shallow local feature map, wherein during the fusing process, a feature value at a target pixel position in the shallow local feature map of the current image frame is enhanced, and a similarity between the feature value at the target pixel position and a feature value at a corresponding pixel position of the target pixel position in the shallow local feature map of the reference image is higher than a preset similarity; and a prediction module, configured to determine whether contamination is on the lens module based on the fused shallow local feature map.

According to a sixth aspect of an embodiment of the present disclosure, an electronic device is provided. The electronic device includes a processor, a storage device, and a computer instruction stored in the storage device and executable by the processor. When the processor executes the computer instruction, the method mentioned in the first aspect, the second aspect, the third aspect, and/or the fourth aspect above is implemented.

According to a seventh aspect of an embodiment of the present disclosure, a computer-readable storage medium is provided. The computer-readable storage medium stores a computer instruction, and when the computer instruction is executed, the method mentioned in the first aspect, the second aspect, the third aspect, and/or the fourth aspect above is implemented.

In the embodiments of the present disclosure, when performing contamination detection on the lens module based on the image captured by the lens module, a characteristic that a position of the contamination is fixed in the plurality of image frames captured by the lens module may be integrated into a detection mechanism to improve the accuracy of a detection result. The current image frame captured by the lens module and the plurality of frames of reference images captured before and/or after the current image frame by the lens module may be acquired. Feature extraction is performed on the current image frame and the plurality of frames of reference images to obtain the shallow local feature map of the current image frame and the shallow local feature map of each frame of reference image. The shallow local feature primarily includes information such as texture, edge, and corner in the image. That is, the shallow local feature encompasses the contamination feature in the image. In order to highlight the contamination feature in the shallow local feature map, the shallow local feature map of each frame of reference image may be fused into the shallow local feature map of the current image frame. Moreover, a specific fusion manner may be selected such that during the fusing process, the feature value at a position with a higher similarity between the shallow local feature map of the current image frame and the shallow local feature map of the reference image is enhanced, thereby obtaining the fused shallow local feature map. Whether the contamination is on the lens module is then determined based on the fused shallow local feature map. Since the position of the contamination in each image frame is fixed, the position with high similarity in the shallow local feature maps of the frames is highly likely to be the position where the contamination is located. By enhancing the feature value at these positions, the feature of the contamination becomes more prominent in the finally obtained fused shallow local feature map, and thus the contamination detection result obtained based on the fused shallow local feature map is also more accurate.

It should be understood that both the foregoing general description and the following detailed description are exemplary and explanatory only and are not restrictive of the present disclosure.

### BRIEF DESCRIPTION OF THE DRAWINGS

The accompanying drawings herein are incorporated into and constitute a part of the specification, illustrate embodiments consistent with the present application, and together with the description serve to explain principles of the present application.
FIG. 1 is a schematic diagram of an image detection method according to an embodiment of the present disclosure.
FIG. 2 is a flowchart of an image detection method according to an embodiment of the present disclosure.
FIG. 3 is a schematic diagram of a method for detecting whether contamination is present on a lens module according to an embodiment of the present disclosure.
FIG. 4 is a schematic diagram of a method for detecting whether contamination is present on a lens module according to an embodiment of the present disclosure.
FIG. 5 is a schematic diagram of a method for detecting whether contamination is present on a lens module, whether fog is present, and a scanning environment type according to an embodiment of the present disclosure.
FIG. 6 is an architectural diagram of a detection model according to an embodiment of the present disclosure.
FIG. 7 is a flowchart of an image detection apparatus according to an embodiment of the present disclosure.
FIG. 8 is a schematic diagram of a logical structure of an electronic device according to an embodiment of the present disclosure.

### DETAILED DESCRIPTION

Exemplary embodiments will be described in detail herein, with examples thereof illustrated in the accompanying drawings. When the following description refers to the accompanying drawings, the same numbers in different drawings represent the same or similar elements unless otherwise indicated. The implementations described in the following exemplary embodiments do not represent all implementations consistent with the present application. Rather, they are merely examples of devices and methods consistent with some aspects of the present application as detailed in the appended claims.

The terms used in the present disclosure are for the purpose of describing particular embodiments only and are not intended to limit the present disclosure. The singular forms "a", "an", and "the" used in the present disclosure and the appended claims are also intended to include the plural forms unless the context clearly indicates otherwise. It should also be understood that the term "and/or" used herein refers to and includes any and all possible combinations of one or more of the associated listed items. Additionally, the term "at least one" used herein denotes any one of a plurality or any combination of at least two of a plurality.

It should be understood that although the terms first, second, third, etc., may be used in the present disclosure to describe various information, such information should not be limited to these terms. These terms are only used to distinguish information of the same type from one another. For example, without departing from the scope of the present disclosure, first information may also be referred to as second information, and similarly, second information may also be referred to as first information. Depending on the context, the word "if" as used herein may be interpreted as "at the time of" or "when" or "in response to a determination that".

To enable those skilled in the art to better understand the technical solutions in the embodiments of the present disclosure, and to make the aforementioned objects, features, and advantages of the embodiments of the present disclosure more comprehensible, the technical solutions in the embodiments of the present disclosure are described in further detail below in conjunction with the accompanying drawings.

In a scenario where a lens module is used to capture an image, the lens module often has contamination. The contamination on the lens module may severely affect quality of a captured image, thereby impacting subsequent use of the image. Therefore, it is necessary to timely detect contamination on the lens module to prompt a user to clean the lens.

For example, taking a scenario where an intraoral three-dimensional scanning device is used to scan a patient's teeth to reconstruct a dental model of the patient, if contamination is present on a lens module of the three-dimensional scanning device, the contamination is present in each frame of image captured by the three-dimensional scanning device. This may severely affect the quality of a three-dimensional model obtained by performing three-dimensional reconstruction using the images, causing the user to need to scan again, severely impacting user experience. Therefore, it is necessary to timely detect the presence of the contamination on the lens module and prompt the user to clean it in a timely manner.

The applicant has found that currently, when performing contamination detection on the lens module, a detection model may be pre-trained using a large number of sample images labeled with whether contamination is present, and then the detection model is used to detect an image to be detected to obtain a detection result. In this detection manner, the model predicts the detection result based solely on features of the current image frame and is susceptible to interference from various situations, such as mistakenly identifying a portion of an image that resembles contamination as actual contamination. However, the applicant has considered that for a scenario where the lens module has contamination, the image captured by the lens module exhibits a significant characteristic. The position of the contamination is fixed in the plurality of image frames captured by the lens module. Currently, when using a model to detect whether contamination is on the lens module, the detection is performed by extracting features of a single image frame captured by the lens module and predicting the detection result based on the features of that single image frame, without utilizing the aforementioned characteristic of this scenario, resulting in low accuracy of the detection result.

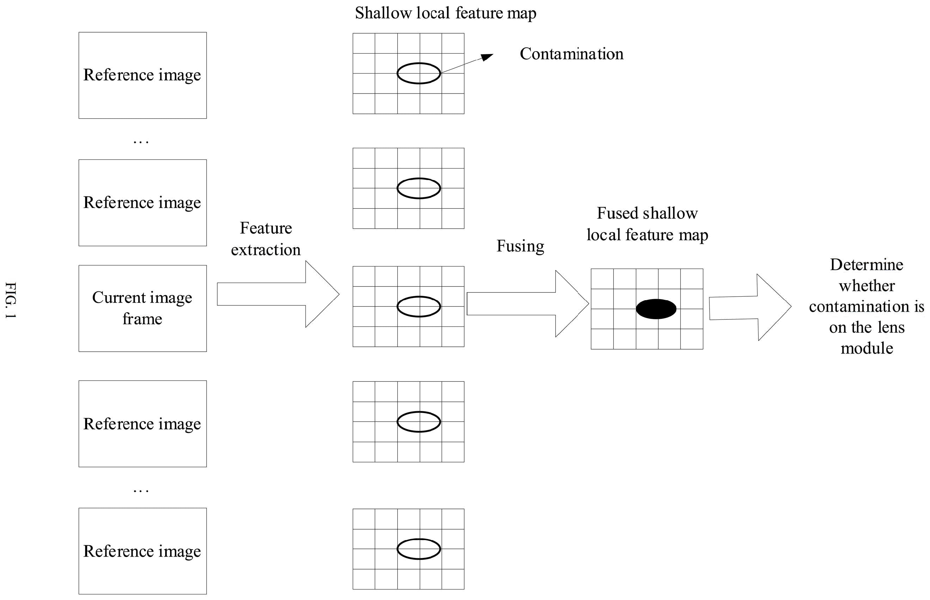

Based on this, an embodiment of the present application provides an image detection method. When performing contamination detection on the lens module based on the image captured by the lens module, a characteristic that the position of the contamination is fixed in the plurality of image frames captured by the lens module may be integrated into the detection mechanism to improve the accuracy of the detection result. For example, as shown in FIG. 1, a current image frame captured by the lens module and a plurality of frames of reference images captured before and/or after the current image frame by the lens module may be acquired. Feature extraction is performed on the current image frame and the plurality of frames of reference images to obtain a shallow local feature map of the current image frame and a shallow local feature map of each frame of the plurality of frames of reference images. The shallow local feature primarily includes information such as texture, edge, and corner in the image. That is, the shallow local feature encompasses the contamination feature in the image. In order to highlight the contamination feature in the shallow local feature map, the shallow local feature map of each frame of the plurality of frames of reference images may be fused into the shallow local feature map of the current image frame. Moreover, a specific fusion manner may be selected such that during the fusing process, the feature value at a position with a higher similarity between the shallow local feature map of the current image frame and the shallow local feature map of the reference image is enhanced, thereby obtaining the fused shallow local feature map. Whether the contamination is on the lens module is then determined based on the fused shallow local feature map. Since the position of the contamination in each image frame is fixed, the position with high similarity in the shallow local feature maps of the frames is highly likely to be the position where the contamination is located. By enhancing the feature value at these positions, the feature of the contamination becomes more prominent in the finally obtained fused shallow local feature map, and thus the contamination detection result obtained based on the fused shallow local feature map is also more accurate.

The image detection method provided in the embodiments of the present application may be executed by various electronic devices with detection capabilities, such as a mobile phone, a computer, a cloud server, etc. The electronic device may be the device that captures the image, or may be another device communicatively connected to the device that captures the image, which is not limited in the embodiments of the present application.

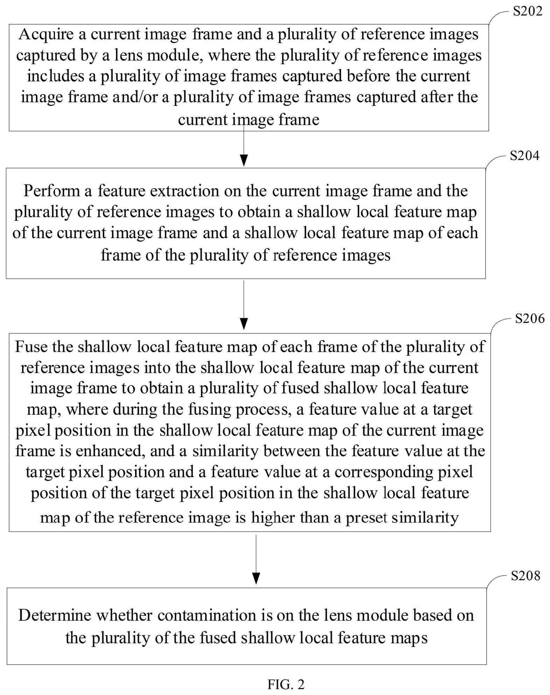

As shown in FIG. 2, a flowchart of an image detection method provided in an embodiment of the present application specifically includes the following steps:
S202, a current image frame and a plurality of reference images captured by a lens module are acquired, where the plurality of reference images includes a plurality of image frames captured before the current image frame and/or a plurality of image frames captured after the current image frame.

In step S202, the current image frame captured by the lens module and the reference image captured by the lens module may be acquired. The plurality of reference images may be a plurality of image frames captured before the current image frame and/or a plurality of image frames captured after the current image frame. For example, (2N+1) image frames continuously captured by the lens module may be acquired, the (N+1)-th image frame is taken as the current image frame, and the N frames before the current image frame and N frames after the current image frame are taken as the reference images. Certainly, the (2N+1) image frames may also be non-continuously captured images, which are not limited in the embodiments of the present application.

S204, Feature extraction is performed on the current image frame and the plurality of reference images to obtain a shallow local feature map of the current image frame and a shallow local feature map of each frame of the plurality of reference images.

In step S204, feature extraction may be performed on the current image frame and each frame of the plurality of reference images respectively to obtain the shallow local feature map of the current image frame and the shallow local feature map of each frame of the plurality of reference images. The shallow local feature is some low-level feature of the image, such as color, texture, edge of the image, etc., which contains more features of pixel points, i.e., contains more details. For features such as the contamination in the image, it is a shallow local feature, i.e., it may be reflected by the shallow local feature map.

Where performing feature extraction on the current image frame and the reference image to obtain the shallow local feature map may be implemented by some feature extraction networks, such as a MobileNetV2 network, a ResNet network, a VGG network, a Transform network, etc.

S206: The shallow local feature map of each frame of the plurality of reference images is fused into the shallow local feature map of the current image frame to obtain a plurality of fused shallow local feature maps, where during the fusing process, a feature value at a target pixel position in the shallow local feature map of the current image frame is enhanced, and a similarity between the feature value at the target pixel position and a feature value at a corresponding pixel position of the target pixel position in the shallow local feature map of the reference image is higher than a preset similarity.

Considering that contamination usually appears at a fixed position in the plurality of image frames captured by the lens module, i.e., the contamination feature appears at the same position in the shallow local feature maps of the plurality of image frames, and since the contamination is the same, the feature values at the position where the contamination is located in the shallow local feature maps of the plurality of frames should be close. Based on this, in step S206, the shallow local feature map of each frame of the reference image may be fused into the shallow local feature map of the current image frame one by one. A suitable fusion manner may be selected such that during the fusing process, the feature value at the target pixel position in the shallow local feature map of the current image frame is enhanced, where the similarity between the feature value at the target pixel position and the feature value at the corresponding pixel position of the target pixel position in the shallow local feature map of the reference image is higher than the preset similarity. The position corresponding to the contamination feature in the shallow local feature map of the current image frame is highly likely to be a position in the shallow local feature map of the current image frame having a higher similarity with the feature value in the shallow local feature map of the reference image. Therefore, during the fusing process, the feature value at the target pixel position with a higher similarity between the two frames of feature maps may be enhanced, so that in the finally obtained fused shallow local feature map, the contamination feature is enhanced, i.e., the contamination feature becomes more prominent.

Where, in order to achieve, during the fusing process, the enhancement of the contamination feature in the shallow local feature map of the current image frame to make the contamination feature more prominent, when fusing the shallow local feature map of the reference image with the shallow local feature map of the current image frame, a fusion manner based on an attention mechanism may be adopted, or a Pyramid Pooling Module (PPM) may be used to fuse them, or an Atrous Spatial Pyramid Pooling (ASPP) module may be used to fuse them, or a Non-Local module may be used to fuse them, etc.

S208, whether contamination is on the lens module is determined based on the plurality of the fused shallow local feature maps.

In step S208, after the fused shallow local feature map is obtained, whether the contamination is on the lens module may be determined based on the fused shallow local feature map. Since the contamination feature in the fused shallow local feature map is strengthened and becomes more prominent, a contamination prediction result obtained based on the fused feature map is more accurate. Where, the contamination detection of the lens module may be performed directly based on the fused shallow local feature map, or the contamination detection of the lens module may be performed by combining the fused shallow local feature map with other types of features of the current image frame, which is not limited in the embodiments of the present application. Where, if the detection result indicates that the contamination is on the lens module, a user may be prompted to clean the contamination. The prompting manner includes but is not limited to, a voice prompt, a pop-up window prompt, a ringtone prompt, a vibration prompt, etc.

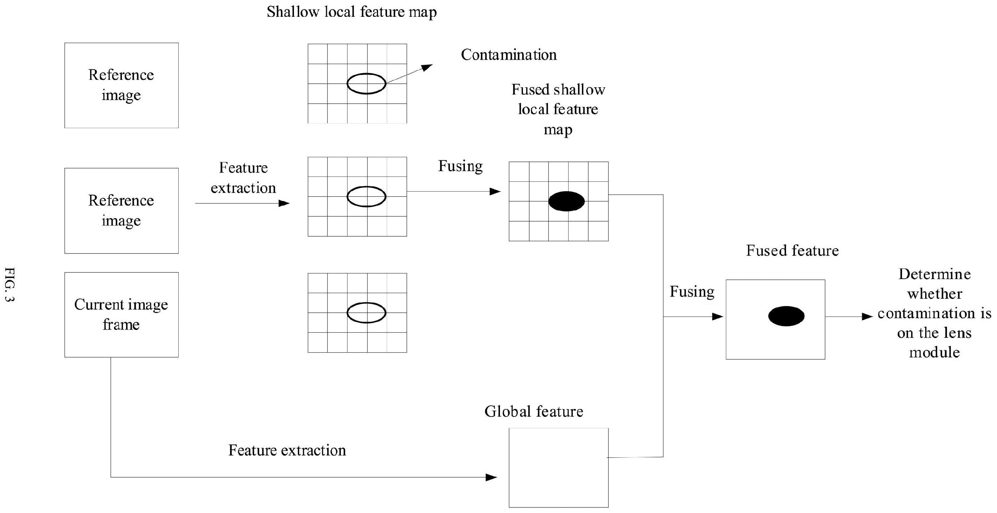

Considering that the shallow local feature map only reflects some low-level features of the image, performing contamination detection on the lens module based only on the shallow local feature may result in an inaccurate detection result. Therefore, in some embodiments, as shown in FIG. 3, when determining whether the contamination is on the lens module based on the fused shallow local feature map, feature extraction may be further performed on the current image frame to obtain a global feature of the current image frame, where the global feature is a higher-level feature extracted from the image, which contains some high-level semantic information in the image. Then, the global feature and the shallow local feature map may be fused to obtain a fused feature, and whether the contamination is on the lens module is determined based on the fused feature. Where, the global feature may be represented in a form of a feature map or a feature vector, which is not limited in the embodiments of the present application.

In some embodiments, if the global feature is represented by a global feature vector, when fusing the global feature and the shallow local feature map to obtain the fused feature, a pooling process may be first performed on the shallow local feature map to obtain a shallow local feature vector, and then the shallow local feature vector and the global feature vector are fused. Where, the fusion manner includes multiple types. For example, the shallow local feature vector and the global feature vector may be directly concatenated to obtain the fused feature. Alternatively, the shallow local feature vector and the global feature vector may be added together to obtain the fused feature, where adding refers to summing corresponding position values of the two to obtain a new feature vector.

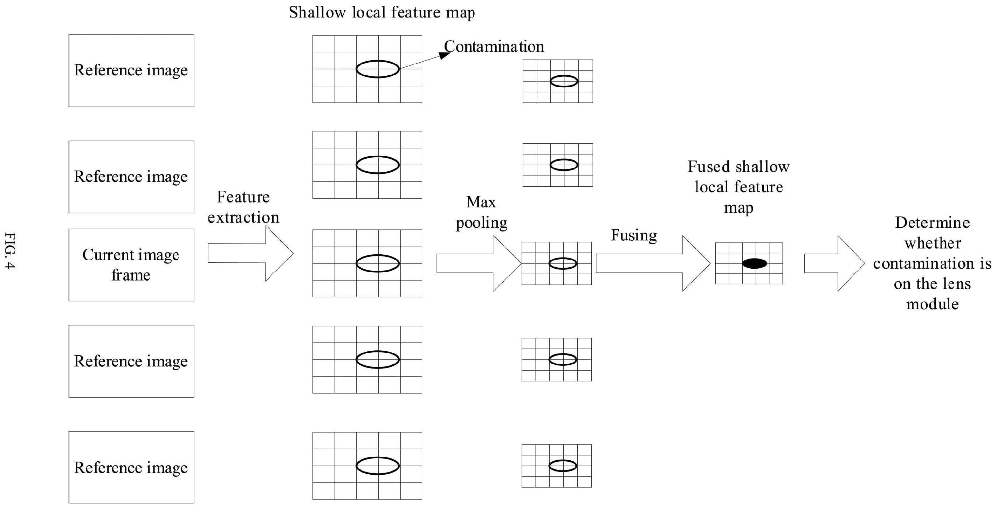

In some embodiments, as shown in FIG. 4, before the shallow local feature map of the reference image is fused into the shallow local feature map of the current image frame, a max pooling process may be performed on the shallow local feature map of the reference image and the shallow local feature map of the current image frame respectively. Then, the shallow local feature map of the reference image after the max pooling process is fused into the shallow local feature map of the current image frame after the max pooling process. Where the max pooling process may extract salient features of local regions in the shallow local feature map, i.e., may extract a region-level (relative to pixel-level) feature of the contamination, making the contamination feature more prominent. In addition, the max pooling process may also reduce a size of the shallow local feature map, thereby accelerating subsequent fusion operations.

In some embodiments, when fusing the shallow local feature map of the reference image into the shallow local feature map of the current image frame to obtain the fused shallow local feature map, the shallow local feature map of each frame of the reference image may be respectively fused with the shallow local feature map of the current image frame. Where, in order to make the feature value at the target pixel position in the shallow local feature map of the current image frame enhanced after the fusion, during the fusion, for each pixel position in the shallow local feature map of the current image frame, if the similarity between the feature value at that pixel position and the feature value at the corresponding pixel position in the shallow local feature map of the reference image is higher, a fusion weight for the feature value at that pixel position is greater. In this manner, the feature value at the pixel position in the shallow local feature map of the current image frame having a higher similarity with that in the shallow local feature map of the reference image may be strengthened. After the shallow local feature map of each frame of the reference image is fused with the shallow local feature map of the current image frame, the fused shallow local feature maps obtained from the fusion may be subjected to an addition process to obtain the fused shallow local feature map, where the addition process involves adding feature values at corresponding pixel positions on the shallow local feature maps of the frames.

In some embodiments, the lens module may be a lens module on a three-dimensional scanning device. The three-dimensional scanning device may be an intraoral scanner, a facial scanner, an industrial scanner, or a professional scanner, and may be used for three-dimensional reconstruction of objects such as teeth, a human face, a human body, an industrial product, industrial equipment, a cultural relic, an artwork, a prosthesis, a medical instrument, a building, etc.

Considering that for a three-dimensional scanning device, during using the three-dimensional scanning device, there may be a scenario where fog is on the lens module due to a certain temperature difference between the scanning environment and an external environment. For example, taking an intraoral three-dimensional scanning device as an example, because there is a certain temperature difference between an intraoral environment and an external environment, fog may be present on the lens module, affecting intraoral scanning. Therefore, fog detection may be performed on the lens module. When fog is detected on the lens module, a defogging function may be first activated to remove the fog on the lens module before capturing an image, thereby avoiding the impact of the fog on the captured image and the subsequent three-dimensional reconstruction process.

Furthermore, for a three-dimensional scanning device, there are usually multiple scanning scenarios. Under different scanning scenarios, a situation of impurities around a target object to be reconstructed, a brightness level of the scanning environment, etc., may vary significantly. Therefore, suitable operating parameters of the three-dimensional scanning device when capturing an image, or suitable processing methods for processing the image when performing three-dimensional reconstruction using the image captured by the three-dimensional scanning device, are different.

For instance, taking an intraoral three-dimensional scanning device as an example, it has two usage scenarios: intraoral scanning and extraoral scanning. Because the intraoral environment and the extraoral environment are quite different. For example, in the intraoral environment, there are interferents such as gingiva, a tongue, and buccal soft tissue, whereas the extraoral environment does not have these issues. Or, compared to the extraoral environment, the brightness is lower in the intraoral environment, etc. Consequently, for the two scanning environments, when subsequently capturing an image or reconstructing teeth using the captured image, the processing methods for the image also different.

Considering the above issues, different operating modes may be set for different usage scenarios, and a suitable processing method, algorithm parameter, and/or component operational state may be configured for each operating mode. In one embodiment, the operating mode of the three-dimensional scanning device may include an operational state of components in the three-dimensional scanning device and a processing method of three-dimensional scanning software matched with the three-dimensional scanning device.

Before using the three-dimensional scanning device to capture an image, a current scanning environment type may also be first detected. After a suitable operating mode is selected based on the current scanning environment type, operations such as image capture and three-dimensional reconstruction may then be performed.

It should be noted that for the intraoral three-dimensional scanning device, in addition to the two usage scenarios of intraoral scanning and extraoral scanning, further subdivisions may be made according to specific application scenarios. Then, different operating modes may be set for each subdivided usage scenario, and a suitable processing method, algorithm parameter, and/or component operational state may be configured for each operating mode.

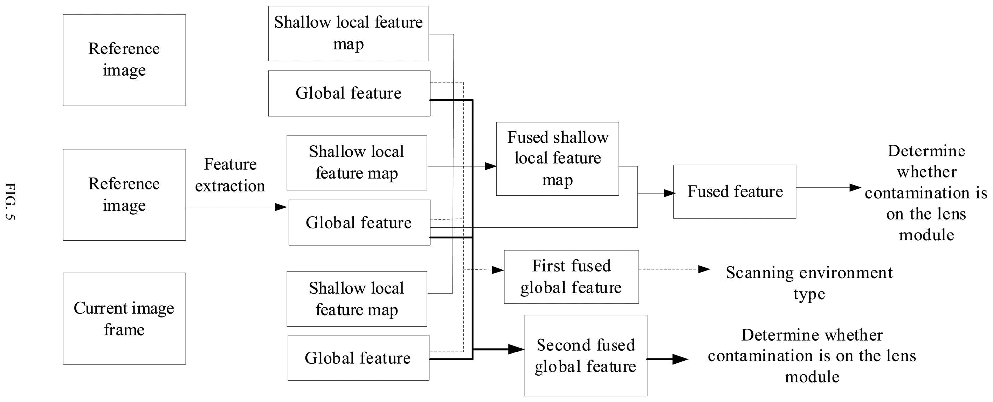

In some embodiments, as shown in FIG. 5, the image detection method may not only perform contamination detection on the lens module based on the image, but also simultaneously perform one or more of lens fog detection and scanning environment type detection, thereby improving detection efficiency. For example, feature extraction may also be performed on the current image frame to obtain the global feature of the current image frame, and feature extraction is performed on the reference image to obtain the global feature of each frame of the reference image. The global feature of the reference image is fused into the global feature of the current image frame to obtain a first fused global feature, and then the current scanning environment type of the three-dimensional scanning device is determined based on the first fused global feature. For instance, taking the intraoral three-dimensional scanning device as an example, it may be determined whether the scanning environment type is an intraoral environment or an extraoral environment.

Or, in some embodiments, feature extraction may be performed on the current image frame to obtain the global feature of the current image frame, and feature extraction is performed on the reference image to obtain the global feature of each frame of the reference image. The global feature of the reference image is fused into the global feature of the current image frame to obtain a second fused global feature, and then whether fog is on the lens module is determined based on the second fused global feature.

Where, performing feature extraction on the current image frame and the reference image to obtain the global feature may be implemented by some feature extraction networks, such as a MobileNetV2 network, a ResNet network, a VGG network, a Transform network, etc.

In some embodiments, the image detection method may be implemented by a pre-trained detection model. For example, the detection of lens module contamination may be implemented by the detection model, or the two tasks of lens module contamination detection and lens fog detection may be simultaneously implemented by the detection model, or the two tasks of lens contamination detection and scanning environment type detection may be simultaneously implemented by the detection model, or the three tasks of lens contamination detection, lens fog detection, and scanning environment type detection may be simultaneously implemented by the detection model.

For instance, taking the detection model simultaneously implementing the two tasks of lens contamination detection and scanning environment type detection as an example, the detection model may be trained by the following method. A current frame sample image and a reference sample image may be acquired. The current frame sample image and the reference frame sample image are captured by a same three-dimensional scanning device. The reference sample image includes a plurality of image frames captured before and/or after the current frame sample image. Where, the current frame sample image carries a label. The label is used to indicate whether a lens module capturing the current frame sample image includes contamination and a scanning environment type corresponding to the current frame sample image, i.e., the scanning environment type in which the three-dimensional scanning device was located when capturing the current frame sample image.

Then, the current frame sample image and the reference sample image may be input into a preset initial model. Feature extraction on the current frame sample image and the reference sample image are performed respectively to obtain the shallow local feature map and the global feature of the current frame sample image, and the shallow local feature map and the global feature of the reference sample image. The shallow local feature map of the reference sample image is fused into the shallow local feature map of the current frame sample image to obtain a fused shallow local feature map (hereinafter referred to as a sample fused shallow local feature to distinguish it from the fused shallow local feature map in an inference stage). The sample fused shallow local feature, and the global feature of the current frame sample image are fused to obtain a fused feature (hereinafter referred to as a sample fused feature to distinguish it from the fused feature in the inference stage). Then, whether the lens module includes the contamination is determined based on the sample fused feature, and a first loss is determined based on a difference between a determination result and the label.

Simultaneously, the initial model may fuse the global feature of the current frame sample image and the global feature of the reference sample image to obtain a first sample fused global feature (hereinafter referred to as a first sample fused global feature to distinguish it from the first fused global feature in the inference stage). Based on the first sample fused global feature, the scanning environment type corresponding to the current frame sample image is determined, and a second loss is determined based on a difference between a determination result and the label. Then, a model parameter of the initial model may be updated based on the first loss and the second loss to train and obtain the detection model.

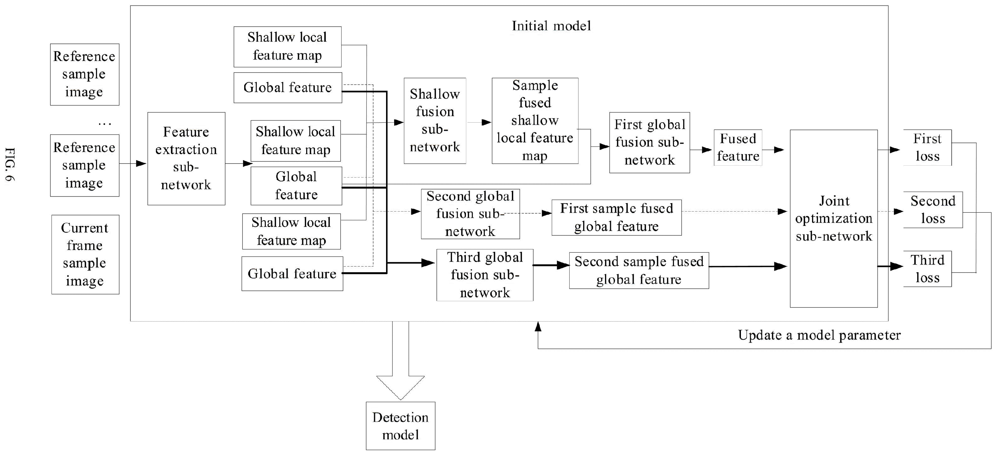

In some embodiments, as shown in FIG. 6, the initial model may include the following sub-networks, a feature extraction sub-network, a shallow local feature fusion sub-network, a first global fusion sub-network, a second global fusion sub-network, and a loss joint optimization sub-network.

The feature extraction sub-network is used to perform feature extraction on the current frame sample image and the reference sample image respectively to obtain the shallow local feature map and the global feature of the current frame sample image, and the shallow local feature map and the global feature of the reference sample image. Where, the feature extraction sub-network may be a MobileNetV2 network, a ResNet network, a VGG network, a Transform network, etc.

The shallow local feature fusion sub-network is used to fuse the shallow local feature map of the reference sample image into the shallow local feature map of the current frame sample image to obtain the sample fused shallow local feature map.

The first global fusion sub-network is used to fuse the sample fused shallow local feature map and the global feature of the current frame sample image to obtain the sample fused feature.

The second global fusion sub-network is used to fuse the global feature of the current frame sample image and the global feature of the reference sample image to obtain the first sample fused global feature.

The loss joint optimization sub-network is used to determine whether the lens module includes the contamination based on the sample fused feature, and determine the first loss based on the difference between the determination result and the label, and to determine the scanning environment type based on the first sample fused global feature, and determine the second loss based on the difference between the determination result and the label. Then, the model parameter of the initial model is updated based on the first loss and the second loss to train and obtain the detection model.

In some embodiments, as shown in FIG. 6, if the detection model may be used to simultaneously implement the three tasks of lens contamination detection, lens fog detection, and scanning environment type detection, the label carried by the current image frame is also used to indicate whether the lens module capturing the current image frame includes fog. The initial model further includes a third global fusion sub-network, used to fuse the global feature of the current frame sample image and the global feature of the reference sample image to obtain a second sample fused global feature.

In addition to the functions, the loss joint optimization sub-network may also be used to determine whether fog is on the lens module based on the second sample fused global feature, and determine a third loss based on a difference between a determination result and the label. The model parameter of the initial model is updated based on the first loss, the second loss, and the third loss to train and obtain the detection model. For example, different weights may be set for the above three losses. A weighted summation process is performed on the three losses based on the weights to obtain a target loss, and then the model parameter of the initial model is updated based on the target loss to train and obtain the detection model.

In related technologies, for the detection of lens contamination, the detection of lens fog, and the detection of scanning environment type, three different detection models need to be pre-trained, and the three different detection models respectively implement these detections. This processing method has low efficiency. However, in the embodiments of the present application, it is considered that before scanning a target object to be reconstructed by the three-dimensional scanning device, the above three types of detection usually need to be performed. Only after determining that the lens has no contamination, no fog, and the scanning environment type is determined, may a corresponding operating mode be selected for subsequent scanning operations. Therefore, in the embodiments of the present application, it is conceived to combine the three detection tasks and implement them using one detection model. Meanwhile, in order to implement the three detection tasks, a new architecture of the detection model is provided in the embodiments of the present application. As shown in FIG. 6, the detection model includes the feature extraction sub-network, the shallow local feature fusion sub-network, the first global fusion sub-network, the second global fusion sub-network, the third global fusion sub-network, and the loss joint optimization sub-network. The feature extracted by the feature extraction sub-network is shared by the three detection tasks, thereby avoiding extracting features separately for the three detection tasks and improving detection efficiency. The shallow local feature fusion sub-network and the first global fusion sub-network are used to implement contamination detection. The second global fusion sub-network is used to implement scanning environment type detection. The third global fusion sub-network is used to implement lens fog detection. The loss joint optimization sub-network is used to determine a total loss based on differences between detection results of the three tasks and actual results (i.e., results indicated by the labels), and then update the model parameter based on the loss to train the model. Through the above manner, not only can the three tasks be completed by one model, but the detection efficiency can also be improved.

In some embodiments, after the current scanning environment type of the three-dimensional scanning device is determined based on the first fused global feature, a current operating mode of the three-dimensional scanning device may be switched to a target operating mode matching the scanning environment type, or a user may be prompted to switch the current operating mode of the three-dimensional scanning device to the target operating mode matching the scanning environment type. When the three-dimensional scanning device is in different operating modes, when an image is captured using the three-dimensional scanning device, an operational state of a component on the three-dimensional scanning device is different, and/or in a process of performing three-dimensional reconstruction on a target object using the image captured by the three-dimensional scanning device, a processing method for processing the image is different. Where, the processing method includes a processing step included in processing the image, an adopted processing algorithm, a processing parameter used during processing, etc. The operational state of the component may be an operating parameter or a state of various types of components in the three-dimensional scanning device, such as an on/off state of a fill light in the three-dimensional device, or a brightness parameter of the fill light, or an on/off state of an anti-fog module, etc. In some embodiments, it is considered that when the three-dimensional scanning device scans the target object to reconstruct a three-dimensional model of the target object, there exist the following two scenarios. One is a scenario where there are many impurities around the target object to be reconstructed, and the other is a scenario where there are few or no impurities around the target object to be reconstructed. For example, taking an intraoral three-dimensional scanning device as an example, in a scenario of scanning a user's real teeth intraorally, since the user's oral cavity includes many interferents around the teeth such as a tongue, buccal soft tissue, and gingiva, the captured image includes many impurities. In contrast, in a scenario of scanning a dental model extraorally, for instance, scanning a dental model made of paraffin, metal, resin, etc., since there are no interferents around the teeth, the captured image has few impurities.

Therefore, the operating mode of the three-dimensional scanning device may include a first operating mode corresponding to the above first type of scenario, and a second operating mode corresponding to the above second type of scenario. When the operating mode is the first operating mode, in the three-dimensional reconstruction process, a processing step for the image captured by the three-dimensional scanning device includes a target step. When the operating mode is the second operating mode, the processing step does not include the target step. Where, the target step is used to determine data in the image that is irrelevant to the three-dimensional reconstruction of the target object to be reconstructed, so that this irrelevant data may be ignored when generating the three-dimensional model of the target object. For instance, taking intraoral scanning as an example, the irrelevant data may refer to regions such as the tongue, buccal soft tissue, and gingiva in the image. The image data corresponding to these regions may be first identified, and these data are not used to participate in the three-dimensional reconstruction, which may eliminate interference of these data on the subsequent three-dimensional reconstruction process. Additionally, a certain operating mode may be subdivided into multiple sub-modes, and for each sub-mode, the processing method may be adaptively updated respectively. For example, when determining data irrelevant to the three-dimensional reconstruction of the target object to be reconstructed (such as teeth), its determination criterion may be updated.

In some embodiments, if it is determined based on the second fused global feature that fog is on the lens module, the three-dimensional scanning device may be controlled to activate the defogging function. By automatically detecting whether fog is on the lens module and automatically activating the defogging function of the three-dimensional scanning device when the fog is present to remove the fog on the lens, the impact of the fog on the lens module on the quality of the captured image and subsequently on the three-dimensional reconstruction may be avoided.

In some embodiments, considering that certain scanning environment types encompass a wide variety of scenarios and may be further subdivided into multiple subtypes-for example, taking the extraoral scanning environment type of an intraoral three-dimensional scanning device as an illustration, the extraoral environment is typically diverse. In a scenario where a dental model is scanned extraorally, the material of the dental model often includes numerous categories, such as metal, resin, and paraffin wax. It is difficult for sample images used to train a detection model to cover all scenarios of the extraoral environment. Consequently, the detection model trained using the sample images is prone to inaccurate predictions for scenarios not covered by the sample images, resulting in suboptimal accuracy of detection results from a pre-trained scanning environment detection model. To improve the accuracy of the prediction result of the detection model for the scanning environment type, in some embodiments, when training the initial model to obtain the detection model, a contrastive learning mechanism may be introduced. That is, a contrastive loss may be introduced when determining the loss of the initial model. By introducing the contrastive loss, the initial model can be constrained such that when the initial model performs feature extraction on an image, for images of a same category (i.e., images with a same scanning environment type), the extracted features are pulled close to one another; conversely, for images of different categories, the extracted features are pushed apart from one another.

For instance, in some embodiments, after the current frame sample image and the reference sample image are input into the initial model, the initial model may determine at least one set of sample image pairs from the current frame sample image and the reference sample image. The two frames of sample images in the sample image pair correspond to the same scanning environment type. Then, a similarity between global features of the two frames of sample images in the at least one set of sample image pairs may be determined. A fourth loss is determined based on a difference between the similarity and a preset similarity threshold. Then, the model parameter of the initial model may be updated based on the first loss, the second loss, and the fourth loss to train and obtain the detection model. Usually, if two frames of sample images correspond to the same scanning environment type, the features of the two frames of sample images should also be similar. Therefore, a similarity threshold may be preset. If the scanning environment types of the two frames of sample images are the same, the similarity of the features of the two frames of sample images should be close to the similarity threshold. Therefore, the fourth loss may be determined based on the degree of closeness between the two. The fourth loss is used as a constraint condition of the model to train the initial model, so that when the trained model performs feature extraction on an image, for images with the same scanning environment type, the extracted features are also more similar.

Certainly, in some embodiments, if the detection model also has the lens fog detection function, the model parameter of the initial model may be updated by simultaneously combining the first loss, the second loss, the third loss, and the fourth loss to train and obtain the detection model.

For example, different weights may be set for the above four losses. A weighted summation process is performed on the four losses based on the weights to obtain a target loss, and then the model parameter of the initial model is updated based on the target loss to train and obtain the detection model. For instance, the target loss may be determined based on the following formula (1):
$Loss = a 1 \times \left(La1+a2\times La2\right) + a 3 \times Lb + a 4 \times Lc ,$
where *La*1 is a loss for the scanning environment type, *a*1 is a weight for the loss for the scanning environment type, *La*2 is a contrastive loss for the scanning environment type, *a*2 is a weight for the contrastive loss for the scanning environment type, *Lb* is a loss for lens contamination, *a*3 is a weight for the loss for lens contamination, *Lc* is a loss for lens fog, and *a*4 is a weight for the loss for lens fog.

In some embodiments, after the current frame sample image and the reference sample image are input into the initial model, the initial model may determine at least one set of sample image triplets from the current frame sample image and the reference sample image. Each set of sample image triplets includes a first sample image, a second sample image having a scanning environment type identical to a scanning environment type of the first sample image, and a third sample image having a scanning environment type different from the scanning environment type of the first sample image. Then, feature extraction may be performed on the first sample image, the second sample image, and the third sample image respectively to obtain a respective global feature. Based on a similarity between the global feature of the second sample image and the global feature of the first sample image, and a similarity between the global feature of the third sample image and the global feature of the first sample image, a fifth loss is determined. Then, the model parameter of the initial model is updated based on the first loss, the second loss, and the fifth loss to train and obtain the detection model. Where, for two frames of sample images with the same scanning environment type, the similarity between their global features should be higher than the similarity between global features of two frames of sample images with different scanning environment types. Based on this principle, the fifth loss is determined. Using the fifth loss to constrain the initial model to update the model parameter of the initial model may make the feature extraction of the detection model obtained by training more accurate, and thus the detection result for the scanning environment type is also more accurate.

Certainly, in some embodiments, if the detection model also has the lens fog detection function, the model parameter of the initial model may be updated by simultaneously combining the first loss, the second loss, the third loss, and the fifth loss to train and obtain the detection model.

In some embodiments, it is considered that scenarios corresponding to some scanning environment types are often relatively similar with little difference. For example, taking the intraoral scanning environment type of the intraoral three-dimensional scanning device as an example, considering that the intraoral environment is often relatively similar with little difference, for images captured in the intraoral environment, their image features are often relatively similar, i.e., feature vectors of the images are distributed within a certain approximate range in a feature space. Therefore, for the detection of a target environment (e.g., the intraoral environment) whose corresponding scenarios are often relatively similar, a large number of sample images captured by the three-dimensional scanning device in the target environment can also be pre-acquired. Then, feature extraction is performed on the sample images to obtain the global features of these sample images, and a feature clustering center of the global features of the sample images is determined. For example, feature vectors representing the global features of the sample images may be obtained, and a clustering center of these global feature vectors is determined. Then, the current scanning environment type of the three-dimensional scanning device may be determined based on the current image frame captured by the three-dimensional scanning device. For instance, feature extraction may be performed on the current image frame to obtain the global feature of the current image frame. Then, according to a degree of proximity between the global feature of the current image frame and the feature clustering center, it is determined whether the current scanning environment type of the three-dimensional scanning device is the target environment. For example, if the feature of the current image frame is very close to the feature clustering center, it indicates that the scanning environment type corresponding to the current image frame is the target environment. The degree of proximity may be represented by a distance between the two, such as a Euclidean distance, a Manhattan distance, etc. If the distance is less than a preset distance threshold, the two are considered close, i.e., it is determined that the scanning environment type corresponding to the current image frame is the target environment.

Further, an embodiment of the present application also provides an image detection method. The method includes:
acquiring an image to be detected currently captured by a lens module of a three-dimensional scanning device,
inputting the image to be detected into a pre-trained detection model, and determining a current scanning environment type of the three-dimensional scanning device via the detection model, where the detection model is trained based on a method including:
   acquiring at least two frames of sample images, the at least two frames of sample images corresponding to a same scanning environment type;
   performing feature extraction on the at least two frames of sample images respectively using a preset initial model to obtain a global feature of each of the at least two frames of sample images;
   determining a target loss based on a difference between a similarity of global features of pairwise sample images among the at least two frames of sample images and a preset similarity threshold; and updating a model parameter of the initial model based on the target loss to train and obtain the detection model.

Certainly, the initial model may also be used to predict the scanning environment type corresponding to the sample image. A total loss is obtained based on a difference between a prediction result and an actual result, as well as the target loss. The model parameter of the initial model is updated based on the total loss to train and obtain the detection model.

For the specific training method of the detection model, reference may be made to the description in the above embodiments, which will not be repeated here.

Further, an embodiment of the present application also provides an image detection method. The method includes:
acquiring an image to be detected currently captured by a lens module on a three-dimensional scanning device;
inputting the image to be detected into a pre-trained detection model, and determining, via the detection model, a current scanning environment type of the three-dimensional scanning device; wherein the detection model is trained based on a method including:
acquiring a sample image triplet, each sample image triplet including a first sample image, a second sample image having a scanning environment type identical to a scanning environment type of the first sample image, and a third sample image having a scanning environment type different from the scanning environment type of the first sample image;
performing feature extraction on the first sample image, the second sample image, and the third sample image respectively using a preset initial model to obtain a respective global feature;
determining a target loss based on a similarity between the global feature of the second sample image and the global feature of the first sample image, and a similarity between the global feature of the third sample image and the global feature of the first sample image; and updating a model parameter of the initial model based on the target loss to train and obtain the detection model.

Certainly, the initial model can also be used to predict the scanning environment type corresponding to the sample image. A total loss is obtained based on a difference between a prediction result and an actual result, as well as the target loss. The model parameter of the initial model is updated based on the total loss to train and obtain the detection model.

For the specific training method of the detection model, reference may be made to the description in the above embodiments, which will not be repeated here.

Further, an embodiment of the present application also provides an image detection method. The method includes:
acquiring an image to be detected currently captured by a lens module on a three-dimensional scanning device;
performing feature extraction on the image to be detected to obtain a global feature;
determining, according to a degree of proximity between the global feature and a preset feature clustering center, whether a current scanning environment type of the three-dimensional scanning device is a target environment; wherein the feature clustering center is a clustering center of global features of a plurality of frames of sample images, and the sample images are images captured by the three-dimensional scanning device in the target environment.

For specific implementation details of the detection method, reference may be made to the description in the above embodiments, which will not be repeated here.

It is not difficult to understand that the solutions described in the above embodiments may be freely combined to obtain new solutions provided there is no conflict. Due to space limitations, they are not enumerated one by one in the embodiments of the present disclosure.

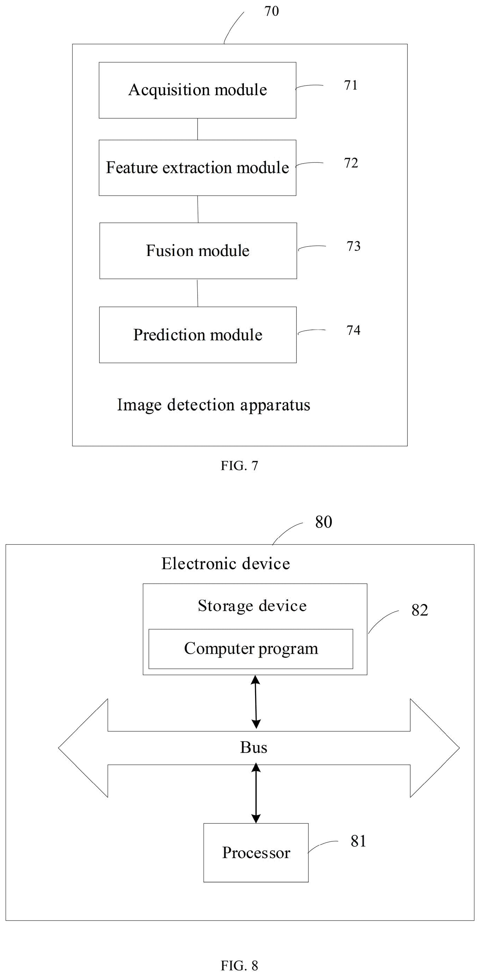

Correspondingly, an embodiment of the present disclosure further provides an image detection apparatus. As shown in FIG. 7, the apparatus includes:
an acquisition module 71, configured to acquire a current image frame and a reference image captured by a lens module, wherein the reference image includes a plurality of image frames captured before and/or after the current image frame;
a feature extraction module 72, configured to perform feature extraction on the current image frame and the reference image respectively to obtain a shallow local feature map of the current image frame and a shallow local feature map of the reference image;
a fusion module 73, configured to fuse the shallow local feature map of the reference image into the shallow local feature map of the current image frame to obtain a fused shallow local feature map, wherein during the fusing process, a feature value at a target pixel position in the shallow local feature map of the current image frame is enhanced, and a similarity between the feature value at the target pixel position and a feature value at a corresponding pixel position of the target pixel position in the shallow local feature map of the reference image is higher than a preset similarity;
a prediction module 74, configured to determine whether contamination is on the lens module based on the fused shallow local feature map.

For specific steps of the apparatus executing the image detection method, reference may be made to the description in the above method embodiments, which will not be repeated here.

Further, an embodiment of the present disclosure provides an electronic device. As shown in FIG. 8, an electronic device 80 includes a processor 81, a storage device 82, and a computer instruction stored in the storage device 82 and executable by the processor 81. When the processor 81 executes the computer instruction, the method of any one of the above embodiments is implemented.

An embodiment of the present disclosure further provides a computer-readable storage medium. The computer-readable storage medium stores a computer program. When the program is executed by a processor, the method of any one of the foregoing embodiments is implemented.

The computer-readable medium includes permanent and non-permanent, removable and non-removable media, and information storage may be implemented by any method or technology. The information may be computer-readable instructions, data structures, program modules, or other data. Examples of computer storage media include, but are not limited to, Phase-change RAM (PRAM), Static RAM (SRAM), Dynamic RAM (DRAM), other types of RAM, Read-Only Memory (ROM), Electrically Erasable Programmable Read-Only Memory (EEPROM), Flash memory or other memory technology, Compact Disc Read-Only Memory (CD-ROM), Digital Versatile Disc (DVD) or other optical storage, magnetic cassette tape, magnetic tape magnetic disk storage or other magnetic storage devices, or any other non-transmission media, which may be used to store information that may be accessed by a computing device. As defined herein, computer-readable media does not include transitory media, such as modulated data signals and carrier waves.

From the description of the above implementations, those skilled in the art can clearly understand that the embodiments of the present disclosure may be implemented by means of software plus a necessary general hardware platform. Based on such an understanding, the essence of the technical solutions of the embodiments of the present disclosure, or the part contributing to the existing technology, may be embodied in the form of a software product. The computer software product may be stored in a storage medium, such as ROM/RAM, a magnetic disk, an optical disc, etc., and includes several instructions for enabling a computer device (which may be a personal computer, a server, or a network device, etc.) to execute the methods described in the various embodiments of the embodiments of the present disclosure or certain parts of the embodiments.

The systems, apparatuses, modules, or units described in the above embodiments may be specifically implemented by a computer chip or an entity, or by a product having a certain function. A typical implementation device is a computer. The specific form of the computer may be a personal computer, a laptop computer, a cellular phone, a camera phone, a smart phone, a personal digital assistant, a media player, a navigation device, an email transceiver, a game console, a tablet computer, a wearable device, or a combination of any several of these devices.

The various embodiments in this specification are described in a progressive manner. The same and similar parts among the various embodiments may be referred to one another. Each embodiment focuses on the differences from other embodiments. In particular, for the apparatus embodiments, since they are substantially similar to the method embodiments, the description is relatively simple. For related parts, reference may be made to the description of the method embodiments. The apparatus embodiments described above are merely illustrative. The modules described as separate components may or may not be physically separated. When implementing the solutions of the embodiments of the present disclosure, the functions of the various modules may be implemented in the same one or more software and/or hardware. Some or all of the modules can also be selected according to actual needs to achieve the purpose of the solutions of this embodiment. Those of ordinary skill in the art can understand and implement them without creative effort.

The above are only specific implementations of the embodiments of the present disclosure. It should be pointed out that for those of ordinary skill in the art, without departing from the principles of the embodiments of the present disclosure, several improvements and modifications can also be made. These improvements and modifications should also be regarded as the protection scope of the embodiments of the present disclosure.

### INDUSTRIAL APPLICABILITY

In the image detection method provided in the present disclosure, by acquiring the current image frame captured by the lens module and the plurality of frames of reference images captured before and/or after the current image frame, and extracting the shallow local feature map of the current image frame and the shallow local feature map of each frame of the reference image, and then fusing the shallow local feature map of each frame of the reference image into the shallow local feature map of the current image frame, by selecting a specific fusion manner, the feature value at the position with a higher similarity between the shallow local feature map of the current image frame and the shallow local feature map of the reference image is enhanced during the fusing process, thereby obtaining the fused shallow local feature map. Since the feature of the contamination becomes more prominent in the finally obtained fused shallow local feature map, the contamination detection result obtained based on this fused shallow local feature map is also more accurate, having strong industrial applicability.

## Claims

1. An image detection method, comprising:
acquiring a current image frame and a plurality of reference images captured by a lens module, the plurality of reference images comprising a plurality of image frames captured before the current image frame and/or a plurality of image frames captured after the current image frame;
performing a feature extraction on the current image frame and the plurality of reference images and obtaining a shallow local feature map of the current image frame and a shallow local feature map of each frame of the plurality of reference images;
fusing the shallow local feature map of each frame of the plurality of reference images into the shallow local feature map of the current image frame and obtaining a plurality of fused shallow local feature maps, and enhancing a feature value at a target pixel position in the shallow local feature map of the current image frame during a fusing process, a similarity between the feature value at the target pixel position and a feature value at a corresponding pixel position of the target pixel position in the shallow local feature map of each frame of the reference image being higher than a preset similarity; and
determining whether contamination is on the lens module based on the plurality of the fused shallow local feature maps.

2. The image detection method according to claim 1, wherein the determining whether contamination is on the lens module based on the plurality of the fused shallow local feature maps comprises:
performing a feature extraction on the current image frame and obtaining a global feature of the current image frame;
fusing the global feature and the shallow local feature map and obtaining a fused feature; and determining whether the contamination is on the lens module based on the fused feature; and/or
wherein the global feature is represented by a global feature vector, and the fusing of the global feature and the shallow local feature map and obtaining the fused feature comprises:
performing a pooling process on the shallow local feature map and obtaining a shallow local feature vector;
concatenating the shallow local feature vector with the global feature vector and obtaining the fused feature; or
adding the shallow local feature vector and the global feature vector and obtaining the fused feature.

3. The image detection method according to claim 1, wherein the fusing the shallow local feature map of each frame of the plurality of reference images into the shallow local feature map of the current image frame comprises:
performing a max pooling process on the shallow local feature map of each frame of the plurality of reference images and the shallow local feature map of the current image frame respectively; and
fusing the shallow local feature map of each frame of the plurality of reference images after the max pooling process into the shallow local feature map of the current image frame after the max pooling process; and/or
wherein fusing the shallow local feature map of each frame of the plurality of reference images into the shallow local feature map of the current image frame and obtaining a plurality of fused shallow local feature maps comprises:
respectively fusing the shallow local feature map of each frame of the plurality of reference images with the shallow local feature map of the current image frame, wherein for each pixel position in the shallow local feature map of the current image frame, if a similarity between the feature value at the target pixel position and the feature value at the corresponding pixel position in the shallow local feature map of each frame of the plurality of reference images is higher, a fusion weight for the feature value at that pixel position is greater; and
performing an addition process on the shallow local feature maps of the frames obtained from the fusion to obtain the plurality of fused shallow local feature maps.

4. The image detection method according to claim 1, wherein the lens module is a lens module on a three-dimensional scanning device, the method further comprises:
performing a feature extraction on the current image frame and obtaining a global feature of the current image frame;
performing a feature extraction on each of the plurality of reference images to obtain a global feature of each of the plurality of reference images;
fusing the global feature of each of the plurality of reference images into the global feature of the current image frame and obtaining a first fused global feature; and
determining a current scanning environment type of the three-dimensional scanning device based on the first fused global feature; and/or
fusing the global feature of each of the plurality of reference images into the global feature of the current image frame and obtaining a second fused global feature; and
determining whether fog is on the lens module based on the second fused global feature.

5. The image detection method according to claim 4, wherein after determining the current scanning environment type of the three-dimensional scanning device based on the first fused global feature, the method further comprises:
switching a current operating mode of the three-dimensional scanning device to a target operating mode matching the scanning environment type, or prompting a user to switch the current operating mode of the three-dimensional scanning device to the target operating mode matching the scanning environment type;
wherein when the three-dimensional scanning device is in different operating modes, in a process of performing a three-dimensional reconstruction on a target object using an image captured by the three-dimensional scanning device, processing methods for processing the image are different, and/or in a process of capturing an image using the three-dimensional scanning device, an operational state of each component in the three-dimensional scanning device is different.

6. The image detection method according to claim 4, wherein if it is determined that the fog is on the lens module based on the second fused global feature, the three-dimensional scanning device is controlled to activate a defogging function.

7. The image detection method according to claim 4, wherein the method is executed by a detection model that is pre-trained, and the detection model is trained based on a method comprising:
acquiring a current frame sample image and a plurality of reference sample images captured by a three-dimensional scanning device, the plurality of reference sample images comprising a plurality of image frames captured before the current image frame and/or a plurality of image frames captured after the current frame sample image; wherein the current frame sample image carries a label, and the label indicates whether contamination is on the lens module when the current frame sample image is captured and the scanning environment type corresponding to the current frame sample image;
inputting the current frame sample image and the plurality of reference sample images into a preset initial model, and the preset initial model performs the following operations:
performing a feature extraction on the current frame sample image and each of the plurality of reference sample images respectively, and obtaining a shallow local feature map and a global feature of the current frame sample image, and a shallow local feature map and a global feature of each of the plurality of reference sample images;
fusing the shallow local feature map of each of the plurality of reference sample images into the shallow local feature map of the current frame sample image, and obtaining a sample fused shallow local feature map;
fusing the sample fused shallow local feature map and the global feature of the current frame sample image, and obtaining a sample fused feature;
determining whether the contamination is on the lens module based on the sample fused feature, and determining a first loss based on a difference between a determination result and the label;
fusing the global feature of the current frame sample image and the global feature of each of the plurality of reference sample images, and obtaining a first sample fused global feature;
determining the scanning environment type based on the first sample fused global feature, and determining a second loss based on a difference between a determination result and the label; and
updating a model parameter of the_initial model based on the first loss and the second loss to train and obtain the detection model.

8. The image detection method according to claim 7, wherein the initial model comprises:
a feature extraction sub-network, used to perform a feature extraction on the current frame sample image and each of the plurality of reference sample images respectively to obtain the shallow local feature map and the global feature of the current frame sample image, and the shallow local feature map and the global feature of each of the plurality of reference sample images;
a shallow local feature fusion sub-network, used to fuse the shallow local feature map of each of the plurality of reference sample images into the shallow local feature map of the current frame sample image to obtain the sample fused shallow local feature map;
a first global fusion sub-network, used to fuse the sample fused shallow local feature map and the global feature of the current frame sample image to obtain the sample fused feature;
a second global fusion sub-network, used to fuse the global feature of the current frame sample image and the global feature of each of the plurality of reference sample images to obtain the first sample fused global feature; and
a loss joint optimization sub-network, used to determine whether the lens module comprises the contamination based on the sample fused feature, and determine the first loss based on the difference between the determination result and the label; determine the scanning environment type based on the first sample fused global feature, and determine the second loss based on the difference between the determination result and the label; and update the model parameter of the initial model based on the first loss and the second loss to train and obtain the detection model.

9. The image detection method according to claim 8, wherein the label is further used to indicate whether fog is on the lens module, and the initial model further comprises:
a third global fusion sub-network, used to fuse the global feature of the current frame sample image and the global feature of each of the plurality of reference sample images to obtain a second sample fused global feature; and
the loss joint optimization sub-network is further used to determine whether the fog is on the lens module based on the second sample fused global feature, determine a third loss based on a difference between a determination result and the label, and update the model parameter of the initial model based on the first loss, the second loss, and the third loss to train and obtain the detection model.

10. The image detection method according to claim 7, wherein after inputting the current frame sample image and the plurality of reference sample images into the initial model, the initial model is further used to perform the following operations:
determining at least one set of sample image pairs from the current frame sample image and the plurality of reference sample images, wherein two frames of sample images of each set of the at least one set of sample image pairs correspond to a same scanning environment type; determining a similarity between global features of the two frames of sample images in the at least one set of sample image pairs; determining a fourth loss based on a difference between the similarity and a preset similarity threshold; and updating the model parameter of the initial model based on the first loss, the second loss, and the fourth loss to train and obtain the detection model; and/or
after inputting the current frame sample image and the plurality of reference sample images into the preset initial model, the preset initial model further performs the following operations:
determining at least one set of sample image triplets from the current frame sample image and the plurality of reference sample images; wherein each set of sample image triplets comprises a first sample image, a second sample image having a scanning environment type identical to a scanning environment type of the first sample image, and a third sample image having a scanning environment type different from the scanning environment type of the first sample image; determining a fifth loss based on a similarity between a global feature of the second sample image and a global feature of the first sample image, and a similarity between a global feature of the third sample image and the global feature of the first sample image; and updating the model parameter of the initial model based on the first loss, the second loss, and the fifth loss to train and obtain the detection model.

11. The image detection method according to claim 1, wherein the lens module is a lens module on a three-dimensional scanning device, the method further comprises:
performing a feature extraction on the current image frame and obtaining a global feature of the current image frame; and
determining, according to a degree of proximity between the global feature and a preset feature clustering center, whether a scanning environment type when the three-dimensional scanning device captured the current image frame is a target environment; wherein the feature clustering center is a clustering center of global features of a plurality of frames of sample images, and the sample image is an image captured by a three-dimensional scanning device in a target environment.

12. An image detection method, wherein the method comprises:
acquiring an image to be detected currently captured by a lens module on a three-dimensional scanning device;
inputting the image to be detected into a pre-trained detection model, and determining a current scanning environment type of the three-dimensional scanning device via the detection model; wherein the detection model is trained based on a method comprising:
acquiring at least two frames of sample images, the at least two frames of sample images corresponding to a same scanning environment type;
performing a feature extraction on the at least two frames of sample images respectively using a preset initial model and obtaining a global feature of each of the at least two frames of sample images; and
determining a target loss based on a difference between a similarity of global features of pairwise sample images among the at least two frames of sample images and a preset similarity threshold; and updating a model parameter of the initial model based on the target loss to train and obtain the detection model.

13. An image detection method, wherein the method comprises:
acquiring an image to be detected currently captured by a lens module on a three-dimensional scanning device;
inputting the image to be detected into a pre-trained detection model, and determining, via the detection model, a current scanning environment type of the three-dimensional scanning device; wherein the detection model is trained based on a method comprising:
acquiring a sample image triplet, each sample image triplet comprising a first sample image, a second sample image having a scanning environment type identical to a scanning environment type of the first sample image, and a third sample image having a scanning environment type different from the scanning environment type of the first sample image;
performing a feature extraction on the first sample image, the second sample image, and the third sample image respectively using a preset initial model to obtain a respective global feature; and
determining a target loss based on a similarity between the global feature of the second sample image and the global feature of the first sample image, and a similarity between the global feature of the third sample image and the global feature of the first sample image; and updating a model parameter of the initial model based on the target loss to train and obtain the detection model.

14. An image detection method, wherein the method comprises:
acquiring an image to be detected currently captured by a lens module on a three-dimensional scanning device;
performing a feature extraction on the image to be detected to obtain a global feature; and
determining, according to a degree of proximity between the global feature and a preset feature clustering center, whether a current scanning environment type of the three-dimensional scanning device is a target environment; wherein the feature clustering center is a clustering center of global features of a plurality of frames of sample images, and the sample image is an image captured by a three-dimensional scanning device in the target environment.

15. An image detection apparatus, wherein the apparatus comprises:
an acquisition module, configured to acquire a current image frame and a reference image captured by a lens module, wherein the reference image comprises a plurality of image frames captured before and/or after the current image frame;
a feature extraction module, configured to perform feature extraction on the current image frame and the reference image respectively to obtain a shallow local feature map of the current image frame and a shallow local feature map of the reference image;
a fusion module, configured to fuse the shallow local feature map of the reference image into the shallow local feature map of the current image frame to obtain a fused shallow local feature map, wherein during the fusing process, a feature value at a target pixel position in the shallow local feature map of the current image frame is enhanced, and a similarity between the feature value at the target pixel position and a feature value at a corresponding pixel position of the target pixel position in the shallow local feature map of the reference image is higher than a preset similarity; and
a prediction module, configured to determine whether contamination is on the lens module based on the fused shallow local feature map.

16. An electronic device, wherein the electronic device comprises a processor, a storage device, and a computer instruction stored in the storage device and executable by the processor, and when the processor executes the computer instruction, the method according to any one of claims 1-14 is implemented.

17. A computer-readable storage medium, wherein the computer-readable storage medium stores a computer program, and when the computer program is executed by a processor, the method according to any one of claims 1-14 is implemented.
